# DEMANDE DE BREVET EUROPEEN

(11) **EP 4 524 673 A1**
(43) Date de publication de la demande: **19.03.2025**
(21) Numéro de dépôt: 24200819.1
(22) Date de dépôt: 17.09.2024
(51) Int. Cl.: G05B 23/02

(54) **DISPOSITIF DE SURVEILLANCE PRÉDICTIVE DU FONCTIONNEMENT D'UNE UNITÉ D' ESTIMATION D'UNE GRANDEUR PHYSIQUE, SYSTÈME ET PROCÉDÉS ASSOCIÉS**

(30) Priorité: 18.09.2023 FR 2309817
(71) Demandeur: Institut de Recherche Technologique Systemx, 91120 Palaiseau (FR); THALES, 92190 Meudon (FR)
(72) Inventeur: KAAKAI, Fateh, 91767 Palaiseau Cedex (FR); RAFFI, Paul-Marie, 94628 Rungis Cedex (FR)
(74) Mandataire: Lavoix

(57) **Abrégé**

La présente invention concerne un dispositif de surveillance prédictive (16) du fonctionnement d'une unité d'estimation (14) d'une grandeur physique recevant des données acquises par une unité de détection (12) et appliquant un modèle d'estimation sur des données acquises,
le dispositif de surveillance prédictive (16) comprenant :
- une unité de génération (20) de données de test appliquant une transformation sur les données acquises,
- une unité de calcul (22) estimant une valeur de la grandeur physique en appliquant sur les données de test le modèle,
- une unité d'analyse (24) de la valeur de test effectuant une comparaison entre la valeur test et une valeur attendue selon un critère d'évaluation de la performance du modèle, et
- une unité d'avertissement (26) émettant une alerte en fonction du résultat de la comparaison.

## Description

La présente invention concerne un dispositif de surveillance prédictive du fonctionnement d'une unité d'estimation d'une grandeur physique. Elle se rapporte également à un système d'estimation comprenant un tel dispositif de surveillance prédictive. La présente invention concerne des procédés de surveillance et d'estimation associés.

Dans le cadre du développement des systèmes critiques mettant en jeu des objectifs et des exigences contraignantes de sécurité, il est effectué des vérifications de la robustesse et de la stabilité des systèmes développés lors de la phase de conception. Ces vérifications sont notamment réalisées grâce à des campagnes de tests et des analyses de sensibilité outillées.

Les technologies de l'intelligence artificielle sont de plus en plus utilisées pour développer des modèles issus de l'apprentissage automatique piloté par les données dans des systèmes critiques.

Ces modèles sont notamment des modèles d'estimation propres à donner une valeur estimée de la grandeur physique sur un domaine d'utilisation prédéfini.

Le domaine d'utilisation prédéfini est, par définition, l'ensemble des conditions de fonctionnement dans lesquelles le modèle d'estimation est spécifiquement conçu pour fonctionner, y compris, mais sans s'y limiter, les restrictions environnementales, géographiques et temporelles.

Un modèle d'estimation est considéré comme robuste lorsque le modèle d'estimation s'il peut continuer à fonctionner correctement malgré des entrées et des conditions anormales en dehors du domaine d'utilisation prédéfini

Le modèle d'estimation modèle est considéré comme stable s'il peut continuer à fonctionner correctement malgré les perturbations de ses entrées à l'intérieur du domaine d'utilisation prédéfini.

La robustesse et la stabilité sont plus délicates à vérifier pour des systèmes conçus par apprentissage automatique piloté par les données. En effet, peu de méthodes formelles existes et elles sont souvent limitées à certaines classes de modèle.

En outre, il n'est pas possible de multiplier à l'infini le nombre de données dans les ensembles de données d'apprentissage pour des raisons évidentes de disponibilité de ces données et de viabilité du coût industriel des activités de vérification.

Il existe donc un besoin pour un dispositif de surveillance prédictive du fonctionnement d'une unité d'estimation d'une grandeur physique permettant de contrôler la robustesse et la stabilité d'un outil obtenu par apprentissage machine.

A cet effet, la description décrit un dispositif de surveillance prédictive du fonctionnement d'une unité d'estimation d'une grandeur physique,
l'unité d'estimation recevant des données acquises par une unité de détection et appliquant un modèle d'estimation sur des données acquises pour obtenir une valeur estimée, le modèle d'estimation étant propre à donner une valeur estimée de la grandeur physique sur un domaine d'utilisation prédéfini,
le dispositif de surveillance prédictive comprenant :
   - une unité de génération de données de test, l'unité de génération recevant les données acquises par l'unité de détection et appliquant une transformation sur les données acquises pour obtenir des données de test, les données de test étant des données observables par l'unité de détection et sur lesquelles l'application du modèle d'estimation donne une valeur attendue,
   - une unité de calcul estimant une valeur de la grandeur physique en appliquant sur les données de test le même modèle d'estimation que l'unité d'estimation pour obtenir une valeur de test,
   - une unité d'analyse de la valeur de test, l'unité d'analyse effectuant au moins une comparaison entre la valeur test et une valeur attendue selon au moins un critère pour obtenir un résultat de comparaison, chaque critère étant un critère d'évaluation de la performance du modèle d'estimation, et
   - une unité d'avertissement émettant une alerte en fonction du résultat de la comparaison.

Selon des modes de réalisation particuliers, le dispositif de surveillance prédictive présente une ou plusieurs des caractéristiques suivantes, prise(s) isolément ou selon toutes les combinaisons techniquement possibles :
- une transformation que l'unité de génération est propre à appliquer est une transformation introduisant du bruit dans les données acquises.
- une transformation que l'unité de génération est propre à appliquer est une fonction de génération de données anormales, une donnée anormale étant une donnée n'appartenant pas au domaine d'utilisation prédéfini.
- un critère utilisé par l'unité d'analyse est un critère de robustesse du modèle d'estimation et la valeur attendue étant une indication de la présence d'une donnée anormale en entrée du modèle d'estimation.
- un critère utilisé par l'unité d'analyse est un critère de stabilité et la valeur attendue est la valeur estimée.
- l'unité d'avertissement est propre à émettre une alerte lorsque, pour un nombre de fois supérieur à un seuil prédéfini, le résultat de la comparaison correspond à un critère non rempli.

La description décrit aussi un système d'estimation d'une grandeur physique, le système d'estimation comprenant :
- une unité d'estimation propre à recevoir des données acquises par une unité de détection et étant propre à appliquer un modèle d'estimation sur des données acquises pour obtenir une valeur estimée, le modèle d'estimation étant propre à donner une valeur estimée de la grandeur physique sur un domaine d'utilisation prédéfini, et
- un dispositif de surveillance prédictive de l'unité d'estimation, le dispositif de surveillance étant tel que précédemment décrit.

Selon des modes de réalisation particuliers, le système d'estimation présente une ou plusieurs des caractéristiques suivantes, prise(s) isolément ou selon toutes les combinaisons techniquement possibles :
- le système d'estimation comprend, en outre, une unité de détection propre à acquérir des données acquises.
- le système d'estimation comporte, en outre, une unité de contrôle propre à émettre une valeur de sortie pour le système d'estimation dépendant à la fois de la valeur estimée et d'une sortie de l'unité d'alerte.

La description décrit aussi un procédé de surveillance prédictive du fonctionnement d'une unité d'estimation d'une grandeur physique,
l'unité d'estimation recevant des données acquises par une unité de détection et appliquant un modèle d'estimation sur des données acquises pour obtenir une valeur estimée, le modèle d'estimation étant propre à donner une valeur estimée de la grandeur physique sur un domaine d'utilisation prédéfini,
le procédé comprenant :
   - une étape de génération de données de test mise en oeuvre, l'étape de génération comprenant la réception des données acquises par l'unité de détection et l'application d'une transformation sur les données acquises pour obtenir des données de test, les données de test étant des données observables par l'unité de détection et sur lesquelles l'application du modèle d'estimation donne une valeur attendue,
   - une étape de calcul comprenant l'estimation d'une valeur de la grandeur physique en appliquant sur les données de test le même modèle d'estimation que l'unité d'estimation pour obtenir une valeur de test,
   - une étape d'analyse de la valeur de test, l'étape d'analyse comprenant au moins une comparaison entre la valeur test et une valeur attendue selon au moins un critère pour obtenir un résultat de comparaison, chaque critère étant un critère d'évaluation de la performance du modèle d'estimation, et
   - une étape d'avertissement comprenant l'émission d'une alerte en fonction du résultat de la comparaison.

La description porte aussi sur un procédé d'estimation d'une grandeur physique comprenant :
- une étape d'estimation, l'étape d'estimation étant mis en oeuvre par une unité d'estimation et comprenant la réception de données acquises par une unité de détection et l'application d'un modèle d'estimation sur des données acquises pour obtenir une valeur estimée, le modèle d'estimation étant propre à donner une valeur estimée de la grandeur physique sur un domaine d'utilisation prédéfini, et
- une étape de mise en oeuvre d'un procédé de surveillance prédictive tel que précédemment décrit.

Dans la présente description, l'expression « propre à » signifie indifféremment « adapté pour », « adapté à » ou « configuré pour ».

Des caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un système d'estimation d'une grandeur physique comprenant un dispositif de surveillance prédictive, et

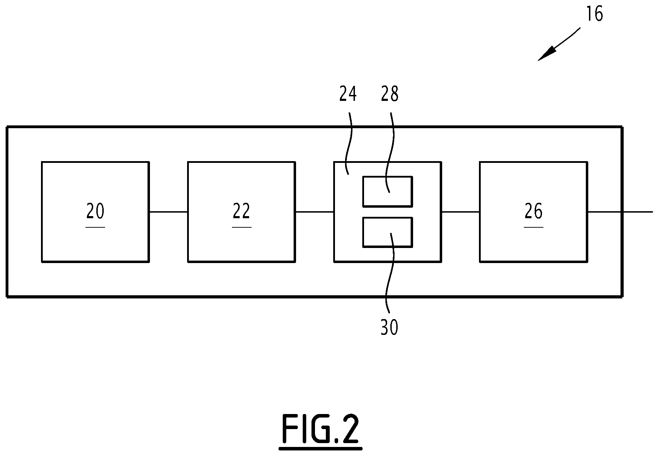

- la figure 2 est une représentation schématique du dispositif de surveillance prédictive de la figure 1.

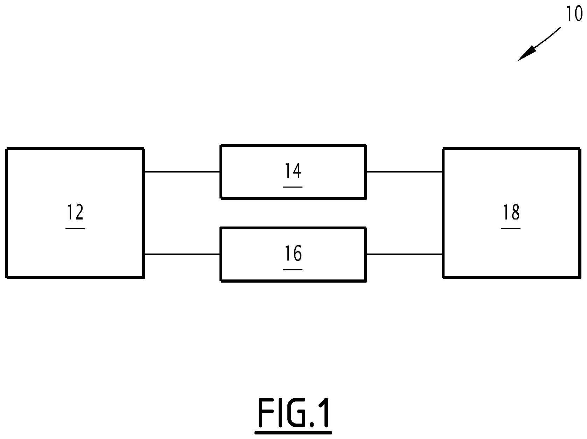

La figure 1 décrit un système d'estimation 10 comprenant une unité de détection 12, une unité d'estimation 14, un dispositif de surveillance prédictive 16 et une unité de contrôle 18.

Le système d'estimation 10 est propre à estimer une grandeur physique.

La grandeur physique peut être de tout type, le système d'estimation 10 servant ainsi de système de mesure.

L'unité de détection 12 est propre à acquérir des données.

A ce titre, l'unité de détection 12 comporte un ou plusieurs capteurs propres à collecter des données.

Les données collectées sont ainsi des mesures.

Selon l'exemple décrit, l'unité de détection 12 est une caméra, la caméra fournissant des images.

Les données acquises par l'unité de détection 12 sont ainsi des images.

En variante ou en complément, l'unité de détection 12 peut comporter tout type de capteurs, et notamment des capteurs propres à collecter des signaux de type audio, vidéo, séries temporelles, données tabulaires ou tout autre type de signaux.

L'unité d'estimation 14 est une unité d'estimation d'une grandeur physique.

L'unité d'estimation 14 est propre à recevoir les données acquises par l'unité de détection 12.

L'unité d'estimation 14 est propre à appliquer un modèle d'estimation sur des données acquises pour obtenir une valeur estimée, qui correspond à la valeur de la grandeur physique recherchée.

Le modèle d'estimation est un modèle issu de l'intelligence artificielle et notamment un modèle ayant été obtenu par apprentissage machine.

De ce fait, le modèle d'estimation a fait l'objet d'un apprentissage sur des données nécessairement incomplètes, ce qui justifie la présence du dispositif de surveillance 16.

A titre d'exemple, le modèle d'estimation est un réseau de neurones.

Le modèle d'estimation est propre à donner une valeur estimée de la grandeur physique sur un domaine d'utilisation prédéfini.

Le domaine d'utilisation prédéfini est, par définition, l'ensemble des conditions de fonctionnement dans lesquelles le modèle d'estimation est spécifiquement conçu pour fonctionner, y compris, mais sans s'y limiter, les restrictions environnementales, géographiques et temporelles.

Le domaine d'utilisation prédéfini est souvent désigné par l'abréviation ODD qui renvoie à la dénomination anglaise de « operational design domain ».

Pour déterminer le domaine d'utilisation prédéfini d'un modèle issu de l'intelligence artificielle, il convient de mesurer les performances du modèle dans des conditions opérationnelles aussi proches que possible des conditions réelles (c'est-à-dire des conditions nominales et anormales).

En utilisant les résultats de l'inférence du modèle sur des données d'entrée contenant des valeurs nominales et des anomalies, le domaine d'utilisation prédéfini ODD du modèle est caractérisé par les plages de paramètres mesurées (par exemple, la luminosité de l'image) pour lesquelles le modèle fournit une sortie correcte dans une marge d'erreur acceptable.

Ce domaine d'utilisation prédéfini ODD du modèle servira de référence pour le dispositif de surveillance 16, car il correspond au domaine dans lequel le modèle d'estimation garantit le comportement et le niveau de performance attendus.

Le dispositif de surveillance 16 est propre à surveiller le fonctionnement de l'unité d'estimation 14.

Le dispositif de surveillance 16 permet de contrôler que l'unité d'estimation 14 fonctionne correctement ou plus exactement va fonctionner correctement comme expliqué dans la suite de la description.

Dans ce contexte, l'expression « fonctionner correctement » renvoie à un fonctionnement correct de l'unité d'estimation dans le futur (en production ou en opération), ce qui confère à la surveillance réalisée par le dispositif de surveillance 16 un aspect prédictif. En ce sens, le dispositif de surveillance 16 est un dispositif de surveillance prédictive.

Le dispositif de surveillance 16 comporte une unité de génération 20, une unité de calcul 22, une unité d'analyse 24 et une unité d'avertissement 26.

L'unité de génération 20 est une unité de génération de données de test.

L'unité de génération 20 étant propre à recevoir les données acquises par l'unité de détection 12.

Les données reçues par l'unité de génération 20 sont donc les mêmes données que les données reçues par l'unité d'estimation 14.

L'unité de génération 20 et l'unité d'estimation 14 utilisent donc les mêmes données d'entrée.

L'unité de génération 20 est propre à appliquer une transformation sur les données acquises pour obtenir des données de test.

En ce sens, les données de test sont des données acquises qui ont été perturbées.

Chaque donnée de test est une donnée pouvant être observée par l'unité de détection 12 et pour laquelle l'application du modèle d'estimation donnera une valeur attendue. Ce caractère « observable » signifie que les données sont des données pouvant être observées dans les conditions de fonctionnement réelles telle que la panne d'un capteur ou une condition de fonctionnement sortant du domaine d'utilisation prédéfini.

Une donnée est une donnée pouvant être observée lorsqu'elle est représentative d'un environnement pouvant survenir dans un cas réel.

Observer de la neige en plein été sur une plage où la température est de 40°C depuis plusieurs semaines n'est, par exemple, pas une donnée pouvant être observée dans la vraie vie.

La valeur attendue est usuellement soit la valeur de la grandeur physique soit un code d'erreur de sortie, le cas n'ayant jamais été rencontré par le modèle.

Plusieurs exemples de transformation illustrant un fonctionnement possible de l'unité de génération 20 sont maintenant décrits.

Selon un premier cas d'usage relatif à la surveillance de la stabilité de l'unité d'estimation 14, l'unité de génération 20 est propre à appliquer une transformation introduisant du bruit dans les données acquises. Les données de test sont alors des données bruitées.

En appliquant une telle transformation, l'unité de génération 20 est propre à assurer que les données bruitées restent dans le domaine d'utilisation prédéfini.

Selon un deuxième cas d'usage relatif à la surveillance de la robustesse de l'unité d'estimation 14, l'unité de génération 20 est propre à appliquer une fonction de génération de données anormales.

Dans ce contexte, une donnée anormale est une donnée n'appartenant pas au domaine d'utilisation prédéfini.

Dans un tel cas, cela implique que le modèle d'estimation prenant en entrée une donnée anormale doit, en fonctionnement normal, interpréter une telle donnée comme une anomalie à ne pas traiter. Typiquement, le modèle d'estimation donnera en sortie un code d'erreur ou une classification de la donnée anormale comme étant une donnée non connue.

Par exemple, dans le cas de données acquises qui sont des images, des exemples de transformation sont des rotations et/ou des translations de l'image d'origine.

On peut aussi appliquer une transformation permettant d'obtenir en sortie des images volontairement floutées, colorées, occultées, trop lumineuses, trop opaques, contenant du bruit ou une simulation de pixels « morts » ou de lignes ou colonnes de pixels « morts ».

Selon un autre exemple, les données acquises sont un ensemble de mesures dont la variation temporelle est suivie. Les données acquises sont alors des séries temporelles.

Dans un tel exemple, une transformation est, à titre d'illustration, une fonction modulant l'amplitude, la fréquence ou le déphasage.

Il est également possible de considérer des changements de fréquence ou de saisonnalité, l'ajout de ruptures ou d'observations aberrantes.

Pour des données acquises qui seraient des données tabulaires, une transformation peut, par exemple, viser à ajouter des observations aberrantes et/ou des corrélations fallacieuses entre les données acquises initiales.

L'unité de génération 20 est contrôlé par une unité de contrôle propre à inhiber son fonctionnement.

L'unité de contrôle inhibe l'unité de génération lorsque la donnée acquise en entrée de l'unité d'estimation 14 n'appartient pas au domaine d'utilisation prédéfini. De fait, par construction, l'unité d'estimation 14 n'est pas adaptée pour estimer une grandeur à partir de données hors du domaine d'utilisation prédéfini et l'évaluation de la robustesse ou de la stabilité dans ce contexte n'a pas de sens. L'unité de calcul 22 est une unité propre à estimer une valeur de la grandeur physique en appliquant sur les données de test le même modèle d'estimation que l'unité d'estimation 14. La valeur estimée par l'unité de calcul 22 est ainsi une valeur de test.

L'unité de calcul 22 est donc un jumeau numérique de l'unité d'estimation 14.

En fonctionnement, la seule différence est que l'unité de calcul 22 opère sur des données d'entrée différentes de celles de l'unité d'estimation 14. Ces données d'entrées sont différentes dans le sens où les données en entrée de l'unité de calcul 22 sont des données de test générées à partir de données réellement acquises pour reproduire les données qui pourraient être acquises dans le futur

L'unité de calcul 22 est ainsi utilisée pour déterminer le comportement du modèle d'estimation en présence des données de test, c'est-à-dire de données d'entrée modifiées pour simuler des données d'entrée bruitées ou des données d'entrée anormales.

L'unité d'analyse 24 est une unité d'analyse de la valeur de test.

Selon l'exemple décrit, l'unité d'analyse 24 comprend deux sous-unités d'évaluation.

La première sous-unité d'évaluation 28 est une sous-unité d'évaluation de la robustesse du modèle d'estimation.

Comme indiqué précédemment, le modèle d'estimation est considéré comme robuste lorsque le modèle d'estimation peut continuer à fonctionner correctement malgré des entrées et des conditions anormales en dehors du domaine d'utilisation prédéfini.

L'évaluation de la robustesse consiste à déterminer si le modèle d'estimation est robuste ou non selon un critère.

Ce critère est, par exemple, le pourcentage de fonctionnement incorrect en présence d'un nombre prédéfini de tests du modèle d'estimation avec des entrées anormales.

La première sous-unité d'évaluation 28 effectue une comparaison entre la valeur test (en sortie de l'unité de calcul 22) et une valeur attendue (en sortie de l'unité d'estimation 14) qui est une indication de la présence d'une donnée anormale en entrée de ce modèle d'estimation.

La deuxième sous-unité d'évaluation 30 est une sous-unité d'évaluation de la stabilité du modèle d'estimation.

Selon la définition précédente, il est rappelé ici que le modèle d'estimation est considéré comme stable s'il peut continuer à fonctionner correctement malgré les perturbations de ses entrées à l'intérieur du domaine d'utilisation prédéfini.

Un exemple de critère de stabilité est le concept « entrées bornées, sorties bornées » ou « invariance de la classe de sortie ».

La deuxième sous-unité d'évaluation 30 effectue une comparaison entre la valeur test (en sortie de l'unité de calcul 22) et une valeur attendue qui est la valeur de sortie de l'unité d'estimation 14.

L'unité d'alerte 26 est propre à émettre une alerte en fonction du résultat de la comparaison.

Dans l'exemple décrit, l'unité d'alerte est propre à émettre une alerte lorsque, pour un nombre de fois supérieur à un seuil prédéfini, le résultat de la comparaison correspond à un critère non rempli.

L'unité de contrôle 18 est propre à émettre une valeur de sortie pour le système d'estimation 10 dépendant à la fois de la valeur estimée et de la sortie de l'unité d'alerte 26.

Par exemple, dans l'implémentation la plus simple, l'unité de contrôle 18 émettra en sortie la valeur estimée acquise déterminée par l'unité d'estimation 14 lorsque l'unité d'alerte n'émet pas d'alerte et dans le cas contraire transmettra le message d'alerte émis par l'unité d'alerte à la place de la sortie de l'unité d'estimation 14.

Un exemple spécifique est maintenant décrit pour illustrer le fonctionnement des différentes sous-unités de l'unité d'analyse 24.

Il est considéré un modèle d'estimation qui serait capable de classer les données d'entrée selon trois classes de sortie, une première classe C1, une deuxième classe C2 et une classe d'anomalie CA.

La première sous-unité d'évaluation 28 évalue alors la robustesse du modèle d'évaluation selon la table de décision suivante :

**[Table 1]**

| Sortie de l'unité d'estimation 14 | Sortie de l'unité de calcul 22 | Résultat de la comparaison | Statut estimé pour la robustesse du modèle d'estimation |
|---|---|---|---|
| C1 | C1 | non respect du critère | oui |
| C1 | C2 | non respect du critère | oui |
| C1 | CA | respect du critère | non |
| C2 | C1 | non respect du critère | oui |
| C2 | C2 | non respect du critère | oui |
| C2 | CA | respect du critère | non |
| CA | C1 | non effectué | non évalué |
| CA | C2 | non effectué | non évalué |
| CA | CA | non effectué | non évalué |

Dans le tableau précédent, un statut « oui » correspond à une unité d'estimation 14 fonctionnant localement (c'est-à-dire pour ces données de test particulières) de manière non robuste et réciproquement, un statut « non » correspond à une unité d'estimation 14 fonctionnant localement de manière robuste.

Le cas d'une donnée acquise déjà anormale est considéré comme peu pertinent dans la mesure où l'unité de génération 20 ne modifie pas les données. Cela ne permet pas de tester la robustesse.

La deuxième sous-unité d'évaluation 30 évalue alors la stabilité du modèle d'évaluation selon la table de décision suivante :

**[Table 2]**

| Sortie de l'unité d'estimation 14 | Sortie de l'unité de calcul 22 | Résultat de la comparaison | Statut estimé pour la la stabilité du modèle d'estimation |
|---|---|---|---|
| C1 | C1 | respect du critère | non |
| C1 | C2 | non respect du critère | oui |
| C1 | CA | non respect du critère | oui |
| C2 | C1 | non respect du critère | oui |
| C2 | C2 | respect du critère | non |
| C2 | CA | non respect du critère | oui |
| CA | C1 | non effectué | non évalué |
| CA | C2 | non effectué | non évalué |
| CA | CA | non effectué | non évalué |

Dans le tableau précédent, un statut « oui » correspond à une unité d'estimation 14 fonctionnant localement (c'est-à-dire pour ces données de test particulières) de manière non stable et réciproquement, un statut « non » correspond à une unité d'estimation 14 fonctionnant localement de manière stable.

Là encore, le cas d'une donnée acquise déjà anormale est considéré comme peu pertinent dans la mesure où l'unité de génération 20 ne modifie pas les données. En d'autres terme, on ne s'intéresse pas à la stabilité du modèle d'estimation 14 en dehors de son domaine d'utilisation prédéfini (ODD).

A partir de ces éléments, c'est l'unité d'avertissement 26 qui va déterminer s'il faut émettre effectivement une alerte ou non.

En ce sens, l'unité d'avertissement 26 réalise une synthèse des informations provenant des deux sous-unités d'évaluation 28 et 30.

Pour cela, l'unité d'avertissement 26 peut effectuer l'analyse sur une période de mesure (une mesure est ici la sortie des sous-unités d'évaluation, c'est-à-dire l'émission ou non d'une alerte pour la stabilité ou la robustesse).

L'unité d'avertissement 26 va accumuler les mesures et lorsque ce nombre de mesures est supérieur à un seuil N, l'unité d'avertissement 26 met, par exemple, en oeuvre une technique de synthèse telle que décrite dans ce qui suit.

Pour les mesures k à k-N (k étant un entier supérieur ou égal à N), le nombre d'alarmes émises est comparé à un seuil, le dépassement du seuil entraînant l'émission d'une alarme pour la propriété (stabilité ou robustesse) considérée.

Alternativement, il est possible de considérer le pourcentage d'alarmes émises au lieu du nombre d'alarmes émises.

Le dispositif de surveillance 16 qui vient d'être décrit permet de vérifier le bon fonctionnement de l'unité d'estimation 14 lors de la phase d'utilisation de l'unité d'estimation 14 en production ou en opération dans l'environnement réel.

Plus spécifiquement, le dispositif de surveillance 16 permet de déterminer si le modèle d'estimation utilisé par l'unité d'estimation 14 garde une robustesse et une stabilité satisfaisantes tout au long de son cycle de vie en production ou en opération.

Le dispositif de surveillance 16 réalise donc un contrôle prédictif de la robustesse et de la stabilité en utilisant une approche hybride au sens où elle repose à la fois sur les données et des règles (approche parfois désignée sous l'appellation anglaise de « data and rule driven »).

Ce contrôle prédictif est basé sur l'unité de génération 20 servant de générateur en ligne d'exemples adversaires qui va servir à produire des entrées perturbées ou anormales, sur l'unité de calcul 22 qui est un jumeau numérique de l'unité d'estimation 14 et sur de tables de décision qui vont produire un verdict sur la robustesse et la stabilité du modèle d'estimation.

Le caractère prédictif du contrôle permet une intervention préventive, ce que ne permettent pas les techniques existantes qui sont réactives.

Le fait que le contrôle puisse être réalisé en temps réel et dans des conditions de fonctionnement réelles est aussi innovant dans la mesure où cela permet de poursuivre en production la vérification de la robustesse et la stabilité du modèle d'estimation afin de compléter l'effort de vérification déjà fait en usine en phase de développement et qui est en pratique souvent incomplet.

Cette approche est notamment adaptée pour des modèles d'estimation réalisant une opération de type de « classification » ou de « régression » mais peut s'étendre à d'autre types d'estimation.

La recherche de robustesse et de stabilité se retrouve dans de nombreux domaines de l'industrie, de sorte que le dispositif de surveillance 16 peut avantageusement être utilisé dans des domaines tels que l'aéronautique, le spatial, la défense, l'énergie, les transports terrestres, la santé ou l'industrie chimique.

Il sera bien compris que le dispositif de surveillance 16 est également intéressant même s'il n'effectue qu'une des deux analyses (robustesse ou stabilité).

A ce titre, dans le cas le plus général, l'unité d'analyse 24 de la valeur de test effectue au moins une comparaison entre la valeur test et une valeur attendue selon au moins un critère pour obtenir un résultat de comparaison, chaque critère étant un critère d'évaluation de la performance du modèle d'estimation et l'unité d'avertissement 26 émettant une alerte en fonction du résultat de la comparaison.

Dans l'exemple qui vient d'être décrit, l'unité de génération 20, l'unité de calcul 22, l'unité d'analyse 24, l'unité d'avertissement 26 sont réalisées chacune sous forme d'un logiciel, ou d'une brique logicielle, exécutable par le processeur.

La mémoire du dispositif de surveillance 16 est alors apte à stocker un logiciel de génération, un logiciel de calcul et un logiciel d'analyse et un logiciel d'avertissement. Le processeur est alors apte à exécuter chacun des logiciels parmi le logiciel de génération, un logiciel de calcul et un logiciel d'analyse et un logiciel d'avertissement.

Toutes ces unités peuvent être développées en utilisant des technologies logicielles comme le C++, le Java, le C, le « Rust » (marque déposée), le « Go » (marque déposée) ou le « Python » (marque déposée). Le choix du langage de programmation sera défini par le niveau de criticité de l'utilisation du système d'estimation 10. La plateforme où s'exécutera ces unités dépendra du cas d'usage. Il peut s'agir d'un simple serveur traditionnel ou d'une station avec des unités de traitement graphique (GPU) en local ou en edge computing, ou d'une plateforme distribuée.

En variante non représentée, l'unité de génération 20, l'unité de calcul 22, l'unité d'analyse 24 et l'unité d'avertissement 26 sont réalisées chacune sous forme d'un composant logique programmable, tel qu'un FPGA (de l'anglais *Field Programmable Gate Array*), ou encore d'un circuit intégré, tel qu'un ASIC (de l'anglais *Application Spécifie Integrated Circuit*)*.*

Lorsque le dispositif de surveillance 16 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Ce qui vient d'être décrit en matière d'implémentation physique est également valable pour l'unité d'estimation 14 et l'unité de contrôle 18.

Ces remarques relatives à l'implémentation physique des unités de génération 20, l'unité de calcul 22, l'unité d'analyse 24 et l'unité d'avertissement 26 sont également valables pour les sous-unités que ces unités contiennent.

Il convient de noter ici d'ailleurs que les unités peuvent contenir plus de sous-unités que les sous-unités représentées sur la figure 1.

En particulier, l'unité de génération 20 pourrait comporter une sous-unité pour chaque cas d'usage, c'est-à-dire une première sous-unité appliquant les transformations adaptées pour l'évaluation de la stabilité (premier cas d'usage) et une deuxième sous-unité appliquant les transformations adaptées pour l'évaluation de la robustesse (deuxième cas d'usage).

## Revendications

1. Dispositif de surveillance prédictive (16) du fonctionnement d'une unité d'estimation (14) d'une grandeur physique,
l'unité d'estimation (14) recevant des données acquises par une unité de détection (12) et appliquant un modèle d'estimation sur des données acquises pour obtenir une valeur estimée, le modèle d'estimation étant propre à donner une valeur estimée de la grandeur physique sur un domaine d'utilisation prédéfini,
le dispositif de surveillance prédictive (16) comprenant :
- une unité de génération (20) de données de test, l'unité de génération (20) recevant les données acquises par l'unité de détection (12) et appliquant une transformation sur les données acquises pour obtenir des données de test, les données de test étant des données observables par l'unité de détection (12) et sur lesquelles l'application du modèle d'estimation donne une valeur attendue,
- une unité de calcul (22) estimant une valeur de la grandeur physique en appliquant sur les données de test le même modèle d'estimation que l'unité d'estimation (14) pour obtenir une valeur de test,
- une unité d'analyse (24) de la valeur de test, l'unité d'analyse (24) effectuant au moins une comparaison entre la valeur test et une valeur attendue selon au moins un critère pour obtenir un résultat de comparaison, chaque critère étant un critère d'évaluation de la performance du modèle d'estimation, et
- une unité d'avertissement (26) émettant une alerte en fonction du résultat de la comparaison.

2. Dispositif de surveillance prédictive selon la revendication 1, dans lequel une transformation que l'unité de génération (20) est propre à appliquer est une transformation introduisant du bruit dans les données acquises.

3. Dispositif de surveillance prédictive selon la revendication 1 ou 2, dans lequel une transformation que l'unité de génération (20) est propre à appliquer est une fonction de génération de données anormales, une donnée anormale étant une donnée n'appartenant pas au domaine d'utilisation prédéfini.

4. Dispositif de surveillance prédictive selon l'une quelconque des revendications 1 à 3, dans lequel un critère utilisé par l'unité d'analyse (24) est un critère de robustesse du modèle d'estimation et la valeur attendue étant une indication de la présence d'une donnée anormale en entrée du modèle d'estimation.

5. Dispositif de surveillance prédictive selon l'une quelconque des revendications 1 à 4, dans lequel un critère utilisé par l'unité d'analyse (24) est un critère de stabilité et la valeur attendue est la valeur estimée.

6. Dispositif de surveillance prédictive selon l'une quelconque des revendications 1 à 5, dans lequel l'unité d'avertissement (26) est propre à émettre une alerte lorsque, pour un nombre de fois supérieur à un seuil prédéfini, le résultat de la comparaison correspond à un critère non rempli.

7. Système d'estimation (10) d'une grandeur physique, le système d'estimation (10) comprenant :
- une unité d'estimation (14) propre à recevoir des données acquises par une unité de détection (12) et étant propre à appliquer un modèle d'estimation sur des données acquises pour obtenir une valeur estimée, le modèle d'estimation étant propre à donner une valeur estimée de la grandeur physique sur un domaine d'utilisation prédéfini, et
- un dispositif de surveillance prédictive (16) de l'unité d'estimation (14), le dispositif de surveillance (16) étant selon l'une quelconque des revendications 1 à 6.

8. Système d'estimation selon la revendication 7, le système d'estimation (10) comprenant, en outre, une unité de détection (12) propre à acquérir des données acquises.

9. Système d'estimation selon la revendication 7 ou 8, dans lequel le système d'estimation (10) comporte, en outre, une unité de contrôle (18) propre à émettre une valeur de sortie pour le système d'estimation (10) dépendant à la fois de la valeur estimée et d'une sortie de l'unité d'alerte (26).

10. Procédé de surveillance prédictive du fonctionnement d'une unité d'estimation (14) d'une grandeur physique,
l'unité d'estimation (14) recevant des données acquises par une unité de détection (12) et appliquant un modèle d'estimation sur des données acquises pour obtenir une valeur estimée, le modèle d'estimation étant propre à donner une valeur estimée de la grandeur physique sur un domaine d'utilisation prédéfini,
le procédé comprenant :
- une étape de génération de données de test mise en oeuvre, l'étape de génération comprenant la réception des données acquises par l'unité de détection (12) et l'application d'une transformation sur les données acquises pour obtenir des données de test, les données de test étant des données observables par l'unité de détection (12) et sur lesquelles l'application du modèle d'estimation donne une valeur attendue,
- une étape de calcul comprenant l'estimation d'une valeur de la grandeur physique en appliquant sur les données de test le même modèle d'estimation que l'unité d'estimation (14) pour obtenir une valeur de test,
- une étape d'analyse de la valeur de test, l'étape d'analyse comprenant au moins une comparaison entre la valeur test et une valeur attendue selon au moins un critère pour obtenir un résultat de comparaison, chaque critère étant un critère d'évaluation de la performance du modèle d'estimation, et
- une étape d'avertissement comprenant l'émission d'une alerte en fonction du résultat de la comparaison.

11. Procédé d'estimation d'une grandeur physique comprenant :
- une étape d'estimation, l'étape d'estimation étant mis en oeuvre par une unité d'estimation (14) et comprenant la réception de données acquises par une unité de détection (12) et l'application d'un modèle d'estimation sur des données acquises pour obtenir une valeur estimée, le modèle d'estimation étant propre à donner une valeur estimée de la grandeur physique sur un domaine d'utilisation prédéfini, et
- une étape de mise en oeuvre d'un procédé de surveillance prédictive selon la revendication 10.
